(19) Europäisches Patentamt
European Patent Office
Office européen des brevets

(11) Publication number: **0 048 986**
**B1**

(12) **EUROPEAN PATENT SPECIFICATION**

(45) Date of publication of patent specification: **29.10.86**

(21) Application number: **81107699.1**

(22) Date of filing: **28.09.81**

(51) Int. Cl.4: **C 08 L 75/04,** B 32 B 27/40, C 08 G 18/14, C 08 G 18/61, C 08 G 77/46, C 08 J 9/30, D 06 N 3/14, D 06 N 7/00

(54) **A polyurethane foam composition suitable for backing a substrate and a substrate containing the polyurethane foam composition.**

(30) Priority: **24.06.81 US 276854**
**29.09.80 US 191633**

(43) Date of publication of application:
**07.04.82 Bulletin 82/14**

(45) Publication of the grant of the patent:
**29.10.86 Bulletin 86/44**

(84) Designated Contracting States:
**BE DE FR GB IT NL**

(56) References cited:
**BE-A- 676 149**
**DE-A-2 748 085**
**GB-A-1 306 372**
**GB-A-1 383 921**
**US-A-3 518 288**
**US-A-3 629 308**
**US-A-3 706 681**
**US-A-3 862 879**

(73) Proprietor: **THE DOW CHEMICAL COMPANY**
**2030 Dow Center Abbott Road P.O. Box 1967**
**Midland, MI 48640 (US)**

(72) Inventor: **Porter, James Richard**
**127 Bois D'Arc**
**City of Lake Jackson Texas 77566 (US)**
Inventor: **Jenkines, Randall Craig**
**204 Crocus**
**City of Lake Jackson Texas 77566 (US)**

(74) Representative: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 048 986 B1

**Description**

The present invention pertains to a polyurethane foam composition which is the reaction product of a frothed polyurethane forming mixture and to the resultant polyurethane foam backed substrates.

Substrates, particularly carpet substrates, have been backed with polyurethane foam as described in U.S. Patents 3,755,212, Dunlap and Parrish; 3,821,130, Barron and Dunlap; and 3,862,879, Barron and Dunlap wherein the frothed polyurethane forming composition does not contain a silicone surfactant and in U.S. Patents 3,706,681, Bachura; 3,849,156, Marlin et al., 3,836,560, 3,947,386, 3,957,842, 4,022,722 and 4,022,941, Prokai et al, wherein the frothed polyurethane forming compositions contain a silicone surfactant.

The polyurethane foam compositions of the present invention containing polyoxyalkylene siloxane branch copolymers have fine cells and excellent stability during processing. Furthermore, the compositions of the present invention incorporate low amounts of the silicone surfactant(s) (stabilizer), and have improved esthetics and cost over the same polyurethane foams without the silicone surfactant (non-stabilized) or containing linear siloxane surfactants. It is known that penetration weight (weight of the polyurethane composition absorbed by a substrate) is dependent upon several factors, including type of substrate, component reactivity, temperature and component viscosity. Penetration weight on the commercially available carpet described in this invention had at least about 25 percent reduction compared to non-stabilized formulations. The reduced penetration and improved stability has resulted, on the average, in a 20 percent improvement in gauge (thickness of foam) over non-stabilized formulations. Cost to the customer has been effectively reduced by the process of this invention because a product (foam backed substrate) is obtained that has the same thickness employing less components by weight. In other terms, the same weight of froth is applied to the back of the substrate and a desirably thicker foam is obtained.

It is well known in the art that the frothing or mechanical whipping operation of the polyurethane forming composition is performed in high shear equipment such as a Hobart mixer. Firestone mixer, Oakes mixer and similar known equipment. The air or other inert gas should be introduced into the polyurethane forming mixture and whipped under pressure in order to obtain a workable froth. The mechanical whipping operation is conducted such that the pressure at the mixer head outlet is in the range from about 85 to about 200 psig (1.48 MPa), preferably from 85 to 150 psig (0.69 to 1.14 MPa).

In those processes where there is no silicone surfactant present, the substrates absorb an inordinate amount of polyurethane forming components thereby resulting in too much absorption beyond what is necessary for tuftbinding. A loss of gauge and a destabilization line at the substrate/foam interface occurs, wherein the cell structure becomes coarse and unappealing. The loss of gauge and destabilization line are esthetically unappealing to the buyer and results in higher costs to the vendor. The solution of this without a silicone is a high catalyst level or quick reaction time, which severely limits processing latitude.

In those processes wherein a silicone surfactant is employed, large quantities of the silicone surfactant are required in order to obtain fine cells or else stability of the polyurethane forming froth is not sufficient to give a fine celled foam or prevent an inordinate amount of penetration (absorption). In the present invention, a large quantity of surfactant (>0.5 part) limits the processing of the froth because froth viscosity is too high to be adequately processed onto the back of a substrate such as a carpet and the pressure in the mixer head may exceed the working limit of 200 psig (1.48 MPa). Also, in the present invention, the improvement in penetration and gauge is no longer measurable from greater than 0.3 parts surfactant. There is no real advantage, therefore, to using surfactant levels above 0.5 parts from a processing or cost standpoint.

DE—A—27 48 085 discloses a polyurethane foam composition which has been prepared by the conventional foam processes, namely one-shot process, prepolymer process and semi-prepolymer process.

A polyurethane foamable reaction mixture is coated on the back of a carpet and then the reaction mixture is allowed to foam. This reference essentially is applying the molded flexible foam art to carpeting. There is no suggestion of using any of the formulations in a process to make a frothed foam. The surfactants used are silicone surfactants that are hydrolyzable.

US—A—3 862 879 teaches ethylene oxide-capped polyols in frothed polyurethane foams made without silicone surfactants.

GB—A—1 306 372 relates to heat-curable polyurethane forming froths. These froths are obtained using amounts of organosilicone copolymer foam stabilizers greater than 0.5, preferably greater than 1 weight part per 100 weight parts of the active hydrogen component.

From US—A—3 706 681 it is known to use a combination of silicone surfactants in a level of from 1.1 to 12 parts by weivht of the polyol or mixture of polyols for the preparation of mechanically frothed polyurethane foams.

The present invention is directed to a polyurethane foam composition which is the reaction product of a frothed polyurethane forming mixture comprising:

(A) a polyethylene polyol having an average of from 2 to 8 hydroxyl groups per molecule and an average hydroxyl equivalent weight of from 100 to 3000;

(B) a polyol having an average of from 2 to 8 hydroxyl groups per molecule and an average hydroxyl

equivalent weight of from 31 to 230, component (B) being optional when component (A) contains an end cap of at least two moles of ethylene oxide per active hydrogen atom or an internal block of at least three moles of ethylene oxide residues per active hydrogen atom, when components (A) and (B) are employed together, they are employed in proportions providing from 50 to 95 parts by weight of component (A) and from 50 to 5 parts by weight of component (B) based upon 100 parts by weight of the total quantity of components (A) and (B), the hydroxyl equivalent weight of component (A) is at least 1.5 times greater than the hydroxyl equivalent weight of component (B), the mixture of components (A) and (B) of component (A) when employed alone has a Brookfield viscosity employing a number 2 spindle at 12 rpm of at least 100 centipoise (0.1 Pascal-second) at 25°C;

(C) an organic polyisocyanate or polyisothiocyanate having an average of from 2 to 4 NCX groups per molecule, each X being independently oxygen or sulfur, components (A), (B) and (C) being employed in quantities so as to provide an NCX/OH ratio of from 0.85:1 to 2:1;

(D) at least one inorganic filler;

(E) at least one organometallic catalyst for reacting components (A) and (B) with component (C) in amounts from 0.01 to 0.25 parts by weight per hundred parts of the combined weights of components (A) and (B), and

(F) a sole silicone surfactant which is a poly(dimethylsiloxane) polyoxyalkylene branch copolymer having an average weight of less than 30,000, wherein at least 60 percent by weight of the polyoxyalkylene groups are oxyethylene groups, the dimethylsiloxane content of the copolymer being from 15 to 40 percent by weight, and at least 40 percent of the weight of the copolymer is derived from the oxyethylene groups, characterized in that Component (E) is employed in a quantity such that an unfrothed mixture of Components (A), (B), (C), (E) and (F) obtains a Brookfield viscosity employing a number 4 spindle at 30 rpm greater than 10,000 centipoise (10 Pascal seconds) at 25°C in less than 40 minutes and Component (F) is present in a quantity from 0.02 to less than 0.5 parts by weight per 100 parts by weight of the combined weights of Components (A) and (B). Preferably, the foam has a cell count of greater than 16 per 0.0025 square inches (1.6 $mm^2$) at a position approximately midway between the carpet-foam interface and the outer edge of the foam. Preferably, the resultant cured foam has a density of less than 113 $lb/ft^3$ (208 $Kg/m^3$).

Suitable relatively high molecular weight polyether polyols which can be employed in the present invention include adducts of one or more compounds containing 2 to 8 hydroxyl groups per molecule and one or more hydrocarbylene or halogen substituted hydrocarbylene oxides.

Suitable hydroxyl containing compounds include those having from 2 to 20, preferably from 2 to 6 carbon atoms such as, for example, ethylene glycol, diethylene glycol, propylene glycol, 1,2-butane diol, 1,3-butane diol, 1,4-butane diol, glycerine, trimethylol propane, p,p'-isopropylidine diphenol, and mixtures thereof.

Suitable hydrocarbylene or halogen substituted hydrocarbylene oxides which can be employed to prepare polyether polyols include those having from 2 to 12, preferably from 2 to 4 carbon atoms such as, for example, ethylene oxide, propylene oxide, 1,2-butylene oxide, 2,3-butylene oxide, styrene oxide, epichlorohydrin, epibromohydrin, 3-methyl-1,2-butylene oxide, 3,3-dimethyl-1,2-butylene oxide, and mixtures thereof.

Other relatively high molecular weight polyols which can be employed herein include polymer-containing polyols such as, for example, those disclosed in U.S. Patents RE 29,118 (Stamberger), RE 28,715 (Stamberger), RE 29,014 (Pizzini et al) and 3,869,413 (Blankenship et al).

Suitable low molecular weight polyols include, for example, ethylene glycol, propylene glycol, 1,3-propane diol, 1,4-butane diol, dipropylene glycol, diethylene glycol, triethylene glycol, tetra-ethylene glycol, tripropylene glycol, tetrapropylene glycol, heptapropylene glycol, and mixtures thereof.

Also suitable as low molecular weight polyols are adducts of initiator comopunds having from 2 to 8 active hydrogen atoms per molecule and a hydrocarbylene oxide as hereinbefore described as long as the resultant adduct has the desired equivalent weight for the low equivalent weight polyol.

Particularly suitable initiator compounds include, for example, water, ethylene glycol, propylene glycol, glycerine, trimethylol propane, aniline, ammonia, ethylene diamine, diethylenetriamine, aminoethylethanolamine, pentaerythritol, glucose, fructose, sucrose, sorbitol, and mixtures thereof.

When adducts of initiator compounds having more than 8 active hydrogen atoms per molecule are employed, they must be employed in admixture with polyols having less than 8 hydroxyl groups per molecule in quantities so as to result in an average of from 2 to 8 hydroxyl groups per molecule.

When the viscosity of a mixture of polyol components (A) and (B) or the viscosity of polyol (A) when employed alone is below 100 centipoise (0.1 Pascal-second) at 25°C, the resultant filled, foam-forming system is too fluid to froth adequately and does not result in a fine celled, low density foam.

Suitable organic polyisocyanates include, for example, 2,4-toluenediisocyanate, 2,6-toluenediisocyanate, xylylenediisocyanate, p,p'-diphenylmethanediisocyanate, p-phenylenediisocyanate, naphthalenediisocyanate, dianisodine diisocyanate, polymethylene polyphenylisocyanate, hexamethylene diisocyanate, and mixtures thereof.

Also suitable are the isocyanate terminated prepolymers prepared from one or more of the above mentioned polyisocyanates and one or more of the above mentioned polyols.

Suitable also are the trimerized diisocyanates and crude diisocyanates.

Also suitable are the corresponding polyisothiocyanates, including isothiocyanate terminated prepolymers.

Suitable catalysts include organometallic compounds, particularly metal carboxylates, and mixtures thereof.

Particularly suitable catalysts include, for example, di-n-butyl tin-bis(mercaptoacetic acid isooctyl ester), dimethyl tin dilaurate, dibutyl tin dilaurate, stannous octoate, lead octoate, and mixtures thereof.

Suitable inorganic filler materials which can be employed herein include, for example, calcium carbonate, alumina trihydrate, talc, bentonite, antimony trioxide, kaolin, barytes either as obtained or treated with fatty acids or organotitanates, and mixtures thereof.

The inorganic filler is usually employed in quantities of from 25 to 300, preferably from 50 to 200 parts per 100 parts by weight based on the total polyol composition.

Suitable silicone surfactants which can be employed herein include the branched organosilicon polyglycol block copolymers having an average molecular weight below 30,000. Such surfactants are described in U.S. Patent 3,518,288 (Haluska).

Particularly suitable are DC193 and DC197 commercially available from Dow Corning Corporation; and L5430 commercially available from Union Carbide Corporation.

Particularly suitable silicone surfactants are those represented by the formula

$$(CH_3)_3Si[OSi(CH_3)_2]_m[\underset{\llcorner D(OC_xH_{2x})_pA}{OSiCH_3}]_nOSi(CH_3)_3$$

wherein m has a value of from 6 to 180, preferably from 6 to 60, most preferably from 11 to 20; n has a value of from 3 to 30, preferably from 3 to 10, most preferably from 3 to 5; each x is independently 2, 3 or 4 with the proviso that in at least 60, preferably 100 percent, of the $(OC_xH_{2x})$ groups, x has a value of 2; p has a value of from 9 to 30, preferably from 9 to 20, most preferably from 9 to 12; and A is selected from

$$-O\overset{\overset{\displaystyle O}{\|}}{C}R$$

(acyloxy) especially where R is methyl,

$$-O\overset{\overset{\displaystyle O}{\|}}{C}OR$$

(carbonate ester),

$$-O\overset{\overset{\displaystyle O}{\|}}{C}NHR$$

(urethane), —OH (hydroxyl), or —R (alkyl), especially methyl; and D is an alkylene radical containing from 3 to 18 carbon atoms, where D is most preferably a propylene radical. These are disclosed by Haluska in U.S. Patent 3,518,288 and Bachura in U.S. Patent 3,706,681.

If desired, the formulations can contain flame suppressing agents such as, for example, dibromoneopentyl glycol, tris(dichloropropyl) phosphate, polyammonium phosphate, beta-chloroethyl phosphonate ester, chlorophosphate ester, polyvinylidene chloride, and mixtures thereof.

Suitable substrates to which the frothed compositions of the present invention are applied include carpet, particularly tufted carpet, paper, synthetic and natural textile fabrics such as, for example, nylon, polyester, acrylic, cotton, and wool.

Suitable primary backing materials which can be employed in the present invention when the substrate is a tufted carpet include those prepared from, for example, jute, polypropylene, nylon, polyesters, and polyacrylates.

Suitable yarns which can be tufted or woven into the primary backing include those prepared from, for example, wool, nylon, polyester, acrylic, cotton, polypropylene, polyethylene, and blends thereof.

The following examples are illustrative of the present invention but are not to be construed as to limiting the scope thereof in any manner.

General procedure

In the examples and comparative runs, a master batch containing a polyol mixture, filler(s) and silicon surfactant was well blended to form a homogeneous creamy dispersion and placed in a run tank maintained at a temperature not less than 45°F (7°C) under a pad of nitrogen. Another run tank containing the polyisocyanate was maintained at a temperature not less than 60°F (16°C). The contents of the run

tanks, and catalyst were metered into an Oakes frother where the contents were frothed employing air as the inert gas. The resultant froth was then placed onto the back of the carpet via a hose and doctored to the desired thickness. The froth exit temperature was maintained at a temperature of at least 86°F (30°C).

The carpet containing the polyurethane-forming froth composition was then cured in an oven at a temperature of 250°F (121°C).

The carpet onto which the frothed polyurethane-forming compositions were doctored was a flat level loop carpet containing 100 percent continuous filament nylon pile weighing 14 $oz/yd^2$ (0.47 $Kg/m^2$) tufted at a gauge of 0.1 inch (3 mm) through an FLW (woven polypropylene needlepunched with nylon or polypropylene fiber) primary backing weighing 4.25 $oz/yd^2$ (0.144 $Kg/m^2$) at a stitch rate of 8 per inch and a pile height of 0.125 inch (3.18 mm).

In the following examples and comparative runs, the properties were determined by the following tests.

The viscosity of the unfilled urethane forming components is obtained by mixing the components for 3 minute(s) and placing 10 ml. of the resultant mixture in a Brookfield LVF Viscometer, maintaining the temperature of the mixture at 25°C±0.5°C and determining the viscosity over the desired period of time. The Brookfield LVF Viscometer was employed using a number 4 spindle rotating at 30 rpm.

The viscosity of a mixture of polyols (A) and (B) or the viscosity of polyol (A) when employed alone is obtained by placing 200 ml of the mixture of polyols (A) and (B) of polyol (A) alone in a Brookfield LVF Viscometer, maintaining the temperature of the material being measured at 25°C, ±0.5°C, and determining the viscosity employing a number 2 spindle rotating at 12 rpm.

Penetration weight was calculated by subtracting the greige weight (the weight of the carpet sample to which the polyurethane-forming froth composition was applied so as to provide a secondary backing), from the greige weight plus polyurethane-forming materials which had soaked into the tufts and primary backing which was the weight of the sample after "skiving" the foam from the back of the carpet sample and brushing with a wire brush to remove as much of the remaining foam as possible.

The cell count was determined employing a microscope equipped with a Polaroid camera to take photomicrographs of foam and visually count the number of cells along the surface plane in a given area. Each area was ten units by ten units, each unit being 0.005 inches (0.1 mm) (0.0025 $inch^2$) (1.6 $mm^2$). The pictures were taken of the foam surface at or near the center of the foam after splitting the foam for this purpose. The surface plane after splitting was dyed so that individual cells were clearly visible.

The foam density was determined by the following formula:

$$0.08333 \times \frac{\text{coating weight-penetration wt. } (oz/yd^2)}{\text{Gauge, (inches)}} = \text{density, } lb/ft^3$$

$$\left[1000 \times \frac{\text{coating weight-penetration wt. } (Kg/m^2)}{\text{Gauge, (mm)}} = \text{density, } (Kg/m^2)\right]$$

The coating weight was obtained by subtracting the greige weight from the total sample weight of the carpet (greige) and foam.

Gauge is the thickness of the foam on the back of the carpet and was measured after the carpet with the foam had been cured.

The following components were employed in the examples and comparative runs.

The composition of the polyurethane-forming mixtures and the resulting foam properties for Examples 1 to 13 and Comparative Runs A to H are shown in Table I.

Polyol A is a glycerine initiated polyoxypropylene glycol endcapped with 15 weight percent ethylene oxide. The resultant primary hydroxyl-containing polyether polyol had an average OH equivalent weight of 1650 and an endcap of an average of 3.75 moles of ethylene oxide per active hydrogen of the polyol.

Polyol B is diethylene glycol having an average OH equivalent weight of 53.

Polyol C is a polyoxyethylene glycol having an average OH equivalent weight of 100.

Polyol D is a glycerine initiated polyoxypropylene glycol having an average OH equivalent weight of 87.

Polyol E is a glycerine initiated heteropolyol prepared from a mixture of propylene oxide and ethylene oxide in a ratio of 88/12 weight percent respectively. The resultant secondary hydroxyl-containing polyether polyol has an average OH equivalent weight of 1270 and an internal block of an average of 2.2 moles of ethylene oxide residues per active hydrogen atom of the polyol.

Polyol F is dipropylene glycol having an average OH equivalent weight of 67.

Polyol G is a polyoxypropylene glycol having an average OH equivalent weight of 1000.

Polyol H is a polyoxypropylene triol containing 20 weight percent of a 50/50 styrene/acrylonitrile copolymer and having an average OH equivalent weight of 2000.

Polyol I is an adduct of a mixture of sucrose and glycerine with propylene oxide having an average functionality of 4.6 and an OH equivalent weight of 130.

Polyol J is a glycerine initiated polyoxypropylene triol having an OH equivalent weight of 240.

Polyisocyanate A is an 80/20 mixture of 2,4-/2,6-toluene diisocyanate having an average NCO equivalent weight of 87.

Polyisocyanate B is prepolymer prepared by reacting an excess of polyisocyanate A with a polyol mixture consisting of 64 weight percent of polyol C and 36 weight percent polyol D. The resultant isocyanate-containing prepolymer had an NCO content of 26.7 percent and an average NCO equivalent weight of 157.

Polyisocyanate C is a carbodiimide modified methylene diphenyldiisocyanate having an NCO equivalent weight of 143 commercially available from Upjohn Company as Isonate® 143L.

Catalyst A is di-n-butyl tin bis(isooctylmercaptoacetate), commercially available from Witco Chemical Co. as Fomrez® UL-6.

Catalyst B is dimethyl tin dilaurate commercially available from Witco Chemical Co. as Fomrez® UL-28.

Filler A is alumina trihydrate commercially available from Kaiser Aluminum Company as H36U.

Filler B is calcium carbonate commercially available from Georgia Marble Company as D-70.

Silicone A is a nonhydrolyzable poly(dimethyl siloxane) polyoxyethylene copolymer having a weight average molecular weight of 4000 commercially available from Dow Corning Corporation as DC-197.

Silicone B is a 40 percent by weight solution of a linear siloxane-polyoxyalkylene block copolymer having a weight average molecular weight of 100,000 in a hydrocarbon solvent commercially available from Union Carbide Corporation as L 5614.

Silicone C is a siloxane-polyoxyalkylene block copolymer having a weight average molecular weight of 40,000, commercially available from Th. Goldschmidt as B 1651. It is a 55 percent weight solution in an aromatic hydrocarbon solvent.

Silicone D is a hydrolyzable polysiloxane surfactant having a weight average molecular weight of 40,000, commercially available from Th. Goldschmidt as B 1651. It is a 55 percent weight solution in an aromatic hydrocarbon solvent.

Silicone D is a hydrolyzable polysiloxane surfactant having a weight average molecular weight of 4,000, commercially available from Th. Goldschmidt as B 1048.

Silicone E is a nonhydrolyzable methyl capped siloxanepolyoxyalkylene block copolymer having a weight average molecular weight of 3,000, commercially available from Union Carbide Corporation as L 5340.

Silicone F is a non-hydrolyzable silicone surfactant having a weight average molecular weight of 15,000 commercially available from Dow Corning Corporation as DC 190.

Silicone G is a silicone surfactant believed to be diluted in a polyoxyalkylene glycol and is commercially available from Union Carbide Corporation as L 5303.

HEW=Hydroxyl Equivalent Weight.

---

®Registered Trademark

TABLE I

| Polyurethane forming mixture, parts by weight | Comparative Run A | Example 1 | Example 2 | Example 3 |
|---|---|---|---|---|
| Comp. (A) polyether polyol | A/90 | A/90 | A/90 | A/90 |
| Comp. (B) polyol | B/10 | B/10 | B/10 | B/10 |
| Comp. (C) polyisocyanate | B/46.1 | B/46.1 | B/46.1 | B/46.1 |
| Comp. (D), filler | A/40<br>B/40 | A/40<br>B/40 | A/40<br>B/40 | A/40<br>B/40 |
| Comp. (E), catalyst | A/0.06 | A/0.06 | A/0.06 | A/0.06 |
| Comp. (F), silicone | 0 | A/0.05 | A/0.11 | A/0.25 |
| HEW (A)/ HEW (B) | 31/1 | 31/1 | 31/1 | 31/1 |
| Viscosity (A+(B)) or (A) alone, cps (Pa · s) | 680<br>(0.68) | 680<br>(0.68) | 680<br>(0.68) | 680<br>(0.68) |
| Viscosity (A), (B), (C), (E) +(F) cps (Pa · s) at | 10,600<br>(10.6)<br>16 min. | 11,000<br>(11)<br>15 min. | 10,600<br>(10.6)<br>16 min. | 10,000<br>(10)<br>2 min. |
| Foam properties coating weight, oz/yd$^2$ (Kg/m$^2$) | 45<br>(1.5) | 46<br>(1.6) | 48<br>(1.6) | 54<br>(1.8) |
| Penetration weight, oz/yd$^2$ (Kg/m$^2$) | 16<br>(0.5) | 10<br>(0.3) | 8<br>(0.3) | 6<br>(0.2) |
| Gauge, in (mm) | 0.235<br>(5.97) | 0.271<br>(6.88) | 0.294<br>(7.47) | 0.333<br>(8.46) |
| Cell count, cells per area | 26 | 17 | 17 | 35 |
| Foam density, lb/ft$^3$ (Kg/m$^3$) | 10.3<br>(165) | 11.1<br>(178) | 11.2<br>(179) | 11.91<br>(191) |

TABLE I (cont'd)

| Polyurethane forming mixture, parts by weight | Example 4 | Example 5 | Example 6 |
|---|---|---|---|
| Comp. (A) poly-ether polyol | A/90 | H/90 | A/100 |
| Comp. (B) polyol | B/10 | B/10 | — |
| Comp. (C) poly-isocyanate | C/45.1 | B/44 | B/11.4 |
| Comp. (D), filler | A/55 | A/55 | A/55 |
| Comp. (E), catalyst | A/0.01 | A/0.07 | A/0.06 |
| Comp. (F), silicone | A/0.15 | A/0.15 | A/0.15 |
| HEW (A)/ HEW (B) | 31/1 | 38/1 | — |
| Viscosity (A)+(B)) or (A) alone, cps (Pa · s) | 680 (0.68) | 1455 (1.455) | 810 (0.81) |
| Viscosity (A), (B), (C), (E) +(F) cps (PA · s) at | 10,000 (10) 2 min. | 10,000 (10) 8 min. | 10,000 (10) 20 min. |
| Foam properties coating weight, oz/yd² (Kg/m²) | 47 (1.6) | 44 (1.5) | 45 (1.5) |
| Penetration weight, oz/yd² (Kg/m²) | 6 (0.2) | 5 (0.2) | 11 (0.4) |
| Gauge, in (mm) | 0.264 (6.71) | 0.311 (7.90) | 0.231 (5.87) |
| Cell count, cells per area | 35 | 30 | 19 |
| Foam density, lb/ft³ (Kg/m³) | 12.8 (205) | 10 (160) | 12.5 (200) |

TABLE I (cont'd)

| Polyurethane forming mixture, parts by weight | Example 7 | Example 8 | Example 9 | Example 10 |
|---|---|---|---|---|
| Comp. (A) polyether polyol | E/88 | G/85 | I/85 | J/85 |
| Comp. (B) polyol | F/12 | F/15 | F/15 | F/15 |
| Comp. (C) polyisocyanate | B/46.1 | B/60 | B/166 | B/108 |
| Comp. (D), filler | A/55 | A/55 | A/55 | A/55 |
| Comp. (E), catalyst | B/0.25 | B/0.07 | A/0.09 | B/0.06 |
| Comp. (F), silicone | A/0.10 | A/0.25 | A/0.15 | A/0.45 |
| HEW (A)/ HEW (B) | 19/1 | 15/1 | 1.9/1 | 3.6/1 |
| Viscosity (A)+(B)) or (A) alone, cps (Pa · s) | 500 (0.5) | 245 (0.245) | 2260 (2.26) | 180 (0.18) |
| Viscosity (A), (B), (C), (E) +(F) cps (Pa · s) at | 10,400 (10.4) 13 min. | 10,000 (10) 8 min. | 10,000 (10) 12-min. | 10,000 (10) 9 min. |
| Foam properties coating weight, oz/yd$^2$ (Kg/m$^2$) | 43 (1.5) | 46 (1.6) | 47 (1.6) | 47 (1.6) |
| Penetration weight oz/yd$^2$ (Kg/m$^2$) | 6 (0.2) | 10 (0.3) | 8 (0.3) | 12 (0.4) |
| Gauge, in (mm) | 0.291 (7.39) | 0.264 (6.71) | 0.353 (8.97) | 0.292 (7.44) |
| Cell count, cells per area | 27 | 17 | 18 | 20 |
| Foam density, lb/ft$^3$ (Kg/m$^3$) | 10.4 (167) | 11.2 (179) | 9.3 (149) | 9.8 (157) |

TABLE I (cont'd)

| Polyurethane forming mixture, parts by weight | Example 11 | Example 12 | Example 13 |
|---|---|---|---|
| Comp. (A) polyether polyol | A/90 | A/90 | A/90 |
| Comp. (B) polyol | B/10 | B/10 | B/10 |
| Comp. (C) polyisocyanate | B/46.1 | B/46.1 | B/46.1 |
| Comp. (D), filler | A/55 | A/55 | A/55 |
| Comp. (E), catalyst | A/0.07 | A/0.07 | A/0.07 |
| Comp. (F), silicone | F/0.15 | D/0.15 | E/0.15 |
| HEW (A)/ HEW (B) | 31/1 | 31/1 | 31/1 |
| Viscosity (A)+(B)) or (A) alone, cps (Pa · s) | 680 (0.68) | 680 (0.68) | 680 (0.68) |
| Viscosity (A), (B), (C), (E) +(F) cps (Pa · s) at | 10,500 (10.5) 15 min. | 11,000 (11) 16 min. | 10,500 (10.5) 15 min. |
| Foam properties coating weight, oz/yd² (Kg/m²) | 48 (1.6) | 51 (1.7) | 47 (1.6) |
| Penetration weight, oz/yd² (Kg/m²) | 8 (0.31) | 9 (0.3) | 6 (0.2) |
| Gauge, in (mm) | 0.303 (7.70) | 0.303 (7.70) | 0.312 (7.92) |
| Cell count, cells per area | 19 | 18 | 29 |
| Foam density, lb/ft³ (Kg/m³) | 11 (176) | 11.6 (186) | 11 (176) |

TABLE I (cont'd)

| Polyurethane forming mixture, parts by weight | Comparative Run B | Comparative Run C | Comparative Run D | Comparative Run E |
|---|---|---|---|---|
| Comp. (A) polyether polyol | A/90 | A/90 | A/90 | A/90 |
| Comp. (B) polyol | B/10 | B/10 | B/10 | B/10 |
| Comp. (C) polyisocyanate | B/46.1 | B/46.1 | B/46.1 | B/46.1 |
| Comp. (D), filler | A/55 | A/55 | A/55 | A/40<br>B/40 |
| Comp. (E), catalyst | A/0.07 | A/0.07 | A/0.07 | A/0.06 |
| Comp. (F), silicone | B/0.05 | B/0.11 | B/0.25 | B/0.56 |
| HEW (A)/ HEW (B) | 31/1 | 31/1 | 31/1 | 31/1 |
| Viscosity (A)+(B)) or (A) alone, cps (Pa · s) | 680<br>(0.68) | 680<br>(0.68) | 680<br>(0.68) | 680<br>(0.68) |
| Viscosity (A), (B), (C), (E) +(F) cps (Pa · s) at | 11,500<br>(11.5)<br>16 min. | 12,000<br>(12)<br>16 min. | 11,500<br>(11.5)<br>15 min. | 12,800<br>(12.8)<br>16 min. |
| Foam properties coating weight, oz/yd² (Kg/m²) | 47<br>(1.6) | 48<br>(1.6) | 51<br>(1.7) | 50<br>(1.7) |
| Penetration weight, oz/yd² (Kg/m²) | 14<br>(0.5) | 14<br>(0.5) | 8<br>(0.3) | 5<br>(0.2) |
| Gauge, in. (mm) | 0.245<br>(6.22) | 0.224<br>(5.69) | 0.290<br>(7.37) | 0.306<br>(7.77) |
| Cell count cells per area | 8 | 2 | 6 | 16 |
| Foam density, lb/ft³ (Kg/m³) | 11.1<br>(178) | 12.9<br>(207) | 12.3<br>(197) | 12.1<br>(194) |

TABLE I (cont'd)

| Polyurethane forming mixture, parts by weight | Comparative Run F | Comparative Run G | Comparative Run H |
|---|---|---|---|
| Comp. (A) polyether polyol | A/90 | A/90 | A/90 |
| Comp. (B) polyol | B/10 | B/10 | B/10 |
| Comp. (C) polyisocyanate | B/46.1 | B/46.1 | B/46.1 |
| Comp. (D), filler | A/55 | A/55 | A/55 |
| Comp. (E), catalyst | A/0.07 | A/0.07 | A/0.07 |
| Comp. (F), silicone | C/0.05 | C/0.15 | C/0.56 |
| HEW (A)/ HEW (B) | 31/1 | 31/1 | 31/1 |
| Viscosity (A)+(B)) or (A) alone, cps (Pa · s) | 680 (0.68) | 680 (0.68) | 680 (0.68) |
| Viscosity (A), (B), (C), (E) +(F) cps (Pa · s) at | 11,500 (11.5) 16 min. | 11,000 (11) 16 min. | 13,000 (13) 19 min. |
| Foam properties coating weight, oz/yd$^2$ (Kg/m$^2$) | 46 (1.6) | 43 (1.5) | 47 (1.6) |
| Penetration weight, oz/yd$^2$ (Kg/m$^2$) | 15 (0.5) | 11 (0.4) | 9 (0.3) |
| Gauge, in. (mm) | 0.248 (6.30) | 0.277 (7.04) | 0.306 (7.77) |
| Cell count, cells per area | 7 | 13 | 10 |
| Foam density, lb/ft$^3$ (Kg/m$^3$) | 10.4 (167) | 9.6 (154) | 10.3 (165) |

**Claims**

1. A polyurethane foam composition which is the reaction product of a frothed polyurethane forming mixture comprising:

(A) a polyether polyol having an average of from 2 to 8 hydroxyl groups per molecule and an average hydroxyl equivalent weight of from 100 to 3000;

(B) a polyol having an average of from 2 to 8 hydroxyl groups per molecule and an average hydroxyl equivalent weight of from 31 to 230, component (B) being optional when component (A) contains an end cap of at least two moles of ethylene oxide per active hydrogen atom or an internal block of at least three moles of ethylene oxide residues per active hydrogen atom, when components (A) and (B) are employed together, they are employed in proportions providing from 50 to 95 parts by weight of component (A) and from 50 to 5 parts by weight of component (B) based upon 100 parts by weight of the total quantity of components (A) and (B), the hydroxyl equivalent weight of component (A) is at least 1.5 times greater than the hydroxyl equivalent weight of component (B), the mixture of components (A) and (B) or component (A) when employed alone has a Brookfield viscosity employing a number 2 spindle at 12 rpm of at least 100 centipoise (0.1 Pascal-second) at 25°C;

(C) an organic polyisocyanate or polyisothiocyanate having an average of from 2 to 4 NCX groups per molecule, each X being independently oxygen or sulfur, components (A), (B) and (C) being employed in quantities so as to provide an NCX/OH ratio of from 0.85:1 to 2:1;

(D) at least one inorganic filler;

(E) at least one organometallic catalyst for reacting components (A) and (B) with component (C) in amounts from 0.01 to 0.25 parts by weight per hundred parts of the combined weights of components (A) and (B), and

(F) a sole silicone surfactant which is a poly(dimethylsiloxane) polyoxyalkylene branch copolymer having an average weight of less than 30,000, wherein at least 60 percent by weight of the polyoxyalkylene groups are oxyethylene groups, the dimethylsiloxane content of the copolymer being from 15 to 40 percent by weight, and at least 40 percent of the weight of the copolymer is derived from the oxyethylene groups, characterized in that Component (E) is employed in a quantity such that an unfrothed mixture of Components (A), (B), (C), (E) and (F) obtains a Brookfield viscosity employing a number 4 spindle at 30 rpm greater than 10,000 centipoise (10 Pascal seconds) at 25°C in less than 40 minutes and Component (F) is present in a quantity from 0.02 to less than 0.5 parts by weight per 100 parts by weight of the combined weights of Components (A) and (B).

2. The foam composition of Claim 1 characterized in that component (F) is represented by the formula

$$(CH_3)_3Si[OSi(CH_3)_2]_m[\underset{\lfloor D(OC_xH_{2x})_pA}{OSiCH_3}]_nOSi(CH_3)_3$$

wherein m has a value of from 6 to 180, n has a value of from 3 to 30, each x is independently 2, 3 or 4 with the proviso that in at least 60 percent of the $(OC_xH_{2x})$ groups, x has a value of 2; p has a value of from 9 to 30; A is selected from

$$-O\overset{\overset{O}{\|}}{C}R$$

(acyloxy) especially where R is methyl,

$$-O\overset{\overset{O}{\|}}{C}OR$$

(carbonate ester),

$$-O\overset{\overset{O}{\|}}{C}NHR$$

(urethane), —OH (hydroxyl), or —R (alkyl); and D is an alkylene radical containing from 3 to 18 carbon atoms.

3. The foam composition of Claim 2 characterized in that m has a value of from 6 to 60; n has a value of from 3 to 10; each x has a value of 2; p has a value of from 9 to 20; A is acetate, urethane, hydroxyl or methyl.

4. The foam composition of Claim 3 characterized in that m has a value of from 11 to 20; n has a value of from 3 to 5; p has a value of from 9 to 12 and D is the propylene radical.

5. A substrate having a polyurethane foam backing containing an inorganic filler or mixture of such filler characterized in that the polyurethane foam is the composition of any of Claims 1, 2 or 3.

**Patentansprüche**

1. Polyurethanschaumzusammensetzung, die das Reaktionsprodukt einer geschäumtes Polyurethan bildenden Mischung ist, die enthält:

(A) ein Polyätherpolyol mit durchschnittlich 2 bis 8 Hydoxylgruppen pro Molekül und einem durchschnittlichen Hydroxyläquivalentgewicht von 100 bis 3000;

(B) ein Polyol mit durchschnittlich 2 bis 8 Hydroxylgruppen pro Molekül und einem durchschnittlichen Hydroxyläquivalentgewicht von 31 bis 230, wobei die Komponente (B) fakultativ ist, wenn die Komponente (A) eine Begrenzung von mindestens 2 Mol Äthylenoxid pro aktivem Wasserstoffatom oder einen inneren Block von mindestens 3 Mol Äthylenoxidresten pro aktivem Wasserstoffatom enthält, und wenn die Komponenten (A) und (B) zusammen verwendet werden, sie in Anteilen verwendet werden, die 50 bis 95 Gew.-Teile der Komponente (A) und 50 bis 5 Gew.-Teile der Komponente (B) ergeben, bezogen auf 100 Gew.-Teile der gesamten Menge der Komponenten (A) und (B), das Hydroxyläquivalentgewicht der Komponente (A) mindestens 1,5 mal größer ist als das Hydroxyläquivalentgewicht der Komponente (B), und die Mischung der Komponenten (A) und (B) oder Komponente (A), wenn diese allein verwendet wird, eine Brookfield-Viskosität unter Verwendung einer Nr. 2-Spindel bei 12 UpM von mindestens 100 cP (0,1 Pascal-Sekunden) bei 25°C besitzt;

(C) ein organisches Polyisocyanat oder Polyisothiocyanat mit durchschnittlich 2 bis 4 NCX-Gruppen pro Molekül, worin jedes X unabhängig voneinander Sauerstoff oder Schwefel bedeutet, und die Komponenten (A), (B) und (C) in solchen Mengen verwendet werden, daß sich ein NCX/OH-Verhältnis von 0,85:1 bis 2:1 ergibt;

(D) mindestens einen anorganischen Füllstoff;

(E) mindestens einen organometallischen Katalysator zur Umsetzung der Komponenten (A) und (B) mit Komponente (C) in Mengen von 0,01 bis 0,25 Gew.-Teilen pro 100 Teile des Gesamtgewichtes der Komponenten (A) und (B), und

(F) ein einziges Silicon-oberflächenaktives Mittel, das ein verzweigtes Poly(dimethylsiloxan)polyoxyalkylen-Copolymer mit einem durchschnittlichen Gewicht von weniger als 30 000 ist, wobei mindestens 60 Gew.-% der Polyoxyalkylengruppen Oxyäthylengruppen sind, der Dimethylsiloxangehalt des Copolymers 15 bis 40 Gew.-% beträgt, und mindestens 40% des Gewichtes des Copolymers von Oxyäthylengruppen stammt, dadurch gekennzeichnet, daß Komponente (E) in einer solchen Menge verwendet wird, daß eine ungeschäumte Mischung der Komponenten (A), (B), (C), (E) und (F) eine Brookfield-Viskosität unter Verwendung einer Nr. 4-Spindel bei 30 UpM von größer also 10 000 cP (10 Pascal-Sekunden) bei 25°C in weniger als 40 Minuten erreicht, und Komponente (F) in einer menge von 0,02 bis weniger als 0,5 Gew.-Teile pro 100 Gew.-Teile des Gesamtgewichtes der Komponenten (A) und (B) vorhanden ist.

2. Schaumzusammensetzung nach Anspruch 1, dadurch gekennzeichnet, daß die Komponente (F) durch die Formel

$$(CH_3)_3Si[OSi(CH_3)_2]_m[OSiCH_3]_nOSi(CH_3)_3$$
$$\quad\quad\quad\quad\quad\quad\quad\quad\quad\quad\quad\quad\quad\quad \llcorner D(OC_xH_{2x})_pA$$

dargestellt wird, worin m einen Wert von 6 bis 180 besitzt, n einen Wert von 3 bis 30 hat, jedes x unabhängig voneinander 2, 3 oder 4 ist, mit der Maßgabe, daß in mindestens 60% der $(OC_xH_{2x})$-Gruppen x einen Wert von 2 hat; p einen Wert von 9 bis 30 besitzt; A ausgewählt ist aus

O
||
—OCR

(Acyloxy), worin R insbesondere Methyl ist,

O
||
—OCOR

(Kohlensäureester),

O
||
—OCNHR

(Urethan), —OH (Hydroxyl), oder —R (Alkyl); und D ein Alkylenradikal mit 3 bis 18 Kohlenstoffatomen ist.

3. Schaumzusammensetzung nach Anspruch 2, dadurch gekennzeichnet, daß m einen Wert von 6 bis 60 besitzt; n einen Wert von 3 bis 10 hat; jedes x einen Wert von 2 besitzt; p einen Wert von 9 bis 20 hat; und A Acetat, Urethan, Hydroxyl oder Methyl ist.

4. Schaumzusammensetzung nach Anspruch 3, dadurch gekennzeichnet, daß m einen Wert von 11 bis 20 besitzt; n einen Wert von 3 bis 5 hat; p einen Wert von 9 bis 12 hat, und D das Propylenradikal ist.

5. Substrat mit einer Polyurethanschaum-Rückseitenbeschichtung, die einen anorganischen Füllstoff oder eine Mischung solcher Füllstoffe enthält, dadurch gekennzeichnet, daß der Polyurethanschaum die Zusammensetzung gemäß einem der Ansprüche 1, 2 oder 3 ist.

**Revendications**

1. Composition de mousse de polyuréthane qui est le produit de réaction d'un mélange formant une mousse de polyuréthane, comprenant:

(A) un polyéther-polyol contenant en moyenne de 2 à 8 groupes hydroxyle par molécule et ayant un poids équivalent moyen d'hydroxyle de 100 à 3000;

(B) un polyol contenant en moyenne de 2 à 8 groupes hydroxyle par molécule et ayant un poids moyen équivalent d'hydroxyle de 31 à 230, le composant (B) étant facultatif quand le composant (A) contient un coiffage terminal d'au moins deux moles d'oxyde d'éthylène par atome d'hydrogène actif ou un bloc interne d'au moins 3 moles de restes d'oxyde d'éthylène par atome d'hydrogène actif, quand les composants (A) et (B) sont utilisés conjointement, on les emploie en des proportions fournissant de 50 à 95 parties en poids de composant (A) et de 50 à 5 parties en poids de composant (B) par rapport à 100 parties en poids de la quantité totale des composants (A) et (B), le poids équivalent d'hydroxyle du composant (A) est au moins 1,5 fois supérieur au poids équivalent d'hydroxyle du composant (B), le mélange des composants (A) et (B) ou le composant (A) quand on l'utilise seul présente une viscosité Brookfield, obtenue à l'aide d'une broche n° 2 à 12 tours/minute, d'au moins 100 centipoises (0,1 Pascal-seconde) à 25°C;

(C) un polyisocyanate ou polyisothiocyanate organique contenant en moyenne de 2 à 4 groupes NCX par molécule, chaque X représentant indépendamment l'oxygène ou le soufre, les composants (A), (B) et (C) étant utilisés en des quantités permettant de fournir un rapport NCX/OH de 0,85:1 à 2:1;

(D) au moins une charge minérale;

(E) au moins un catalyseur organo-métallique pour faire réagir les composants (A) et (B) avec le composant (C), en des proportions de 0,01 à 0,25 parties en poids par 100 parties des poids combinés des composants (A) et (B), et

(F) un seul tensio-actif siliconique qui est un copolymère ramifié poly(diméthylsiloxane)/polyoxyalkylène ayant un poids moyen inférieur à 30 000, dans lequel au moins 60% en piods des groupes polyoxyalkylène sont des groupes oxyéthylène, la teneur en diméthylsiloxane du copolymère étant de 15 à 40% en poids, et au moins 40% en poids du copolymère sont dérivés de groupes oxyéthylène, caractérisée en ce qu'on utilise le composant (E) en une quantité telle qu'un mélange n'ayant pas moussé des composants (A), (B), (C), (E) et (F) atteint une viscosité Brookfield, obtenue à l'aide d'une broche n° 4 à 30 t/min, de plus de 10 000 centipoises (10 Pascal-secondes) à 25°C en moins de 40 minutes et le composant (F) est présent en une quantité de 0,02 à moins de 0,5 partie en poids par 100 parties en poids des poids combinés des composants (A) et (B).

2. Composition de mousse selon la revendication 1, caractérisée en ce que le composant (F) répond à la formule:

$$(CH_3)_3Si[OSi(CH_3)_2]_m[OSiCH_3]_nOSi(CH_3)_3$$
$$\quad\quad\quad\quad\quad\quad\quad\quad\quad\quad\llcorner D(OC_xH_{2x})_pA$$

dans laquelle *m* a une valeur de 6 à 180, *n* a une valeur de 3 à 30, chaque *x* représente indépendamment 2, 3 ou 4, à la condition que, dans au moins 60% des groupes ($OC_xH_{2x}$), la valeur de *x* soit de 2; *p* a une valeur de 9 à 30; A est choisi parmi les groupes

$$\overset{\displaystyle O}{\underset{\displaystyle -OCR}{||}}$$

(acyloxy), surtout où R représente le méthyle,

$$\overset{\displaystyle O}{\underset{\displaystyle -OCOR}{||}}$$

(carbonate),

$$-O\overset{\displaystyle O}{\overset{\|}{C}}NHR$$

(uréthane), —OH (hydroxyle) ou R alkyle; et D est un radical alkylène de 3 à 18 atomes de carbone.

3. Composition de mousse selon la revendication 2, caractérisée en ce que *m* a une valeur de 6 à 60; *n* a une valeur de 3 à 10; chaque *x* a une valeur de 2; *p* a une valeur de 9 à 20; A est un radical acétate, uréthane, hydroxyle ou méthyle.

4. Composition de mousse selon la revendication 3, caractérisée en ce que *m* a une valeur de 11 à 20; *n* a une valeur de 3 à 5; *p* a une valeur de 9 à 12 et D est le radical propylène.

5. Substrat ayant un support en mousse de polyuréthane contenant une charge minérale ou un mélange de telles charges, caractérisé en ce que la mousse de polyuréthane est la composition selon l'une quelconque des revendications 1, 2 et 3.